# EUROPÄISCHE PATENTSCHRIFT

(11) **EP 1 820 139 B1**
(45) Veröffentlichungstag und Bekanntmachung des Hinweises auf die Patenterteilung: **30.09.2009**
(21) Anmeldenummer: 05812435.5
(22) Anmeldetag: 24.11.2005
(51) Int. Cl.: G06K 7/00, G01S 13/75

(54) **KOMMUNIKATIONSGERÄT**
COMMUNICATION DEVICE
APPAREIL DE COMMUNICATION

(30) Priorität: 26.11.2004 DE 102004057266
(43) Veröffentlichungstag der Anmeldung: 22.08.2007
(73) Patentinhaber: Giesecke & Devrient GmbH, 81667 München (DE)
(72) Erfinder: FINKENZELLER, Klaus, 85774 Unterföhring (DE)
(74) Vertreter: Klunker . Schmitt-Nilson . Hirsch
(86) Internationale Anmeldenummer: PCT/EP2005/012592
(87) Internationale Veröffentlichungsnummer: WO 2006/056451

(56) Entgegenhaltungen:
- EP-A- 0 428 322
- WO-A-01/61883
- WO-A-03/081516
- US-A- 5 682 032
- US-B1- 6 354 493

## Beschreibung

Die Erfindung betrifft ein Kommunikationsgerät zur kontaktlosen Kommunikation mit einem Transponder. Weiterhin betrifft die Erfindung ein System mit wenigstens einem Transponder und einer Kommunikationseinrichtung sowie ein Verfahren zur Detektion der Anwesenheit wenigstens eines Transponders in einem definierten Gebiet.

Transponder können bei vielerlei Anwendungen eingesetzt werden, bei denen eine kontaktlose Datenübertragung über kurze Entfernungen vorgesehen ist. Als Kommunikationspartner wird in der Regel ein Lesegerät eingesetzt, das beispielsweise Informationen aus dem Transponder ausliest oder in den Transponder einschreibt. In vielen Fällen verfügt der Transponder nicht über eine eigene Energiequelle, sondern bezieht die für seinen Betrieb erforderliche Energie vom Lesegerät. Um eine Kommunikation mit einem Transponder durchführen zu können, ist es erforderlich, daß sich der Transponder in Übertragungsreichweite zum Lesegerät befindet. Da bei vielen Anwendungen die Entfernung zwischen dem Lesegerät und dem Transponder beträchtlich variieren kann, ist dem Lesegerät nicht a priori bekannt, ob sich der Transponder bzw. ob sich irgendein Transponder in Übertragungsreichweite zum Lesegerät befindet. Um dies zu ermitteln kann beispielsweise vorgesehen werden, daß das Lesegerät versuchsweise mit dem Transponder kommuniziert und hierzu permanent ein Kommunikationssignal aussendet. Wenn daraufhin eine Antwort beim Lesegerät eingeht, befindet sich der Transponder in Übertragungsreichweite.

Ein Nachteil dieser Vorgehensweise besteht allerdings darin, daß für die Kommunikation, insbesondere für die Kommunikation mit passiven Transpondern, bei denen die Kommunikation zusätzlich der Energieübertragung dient, eine sehr hohe Sendeleistung des Lesegeräts erforderlich ist. Daraus resultiert zum einen ein hoher Energieverbrauch des Lesegeräts, der während der Zeit, innerhalb der sich kein Transponder in Übertragung-Reichweite zum Lesegerät befindet, nutzlos aufgewendet wird. Zum anderen ist eine unnötige Abstrahlung von elektromagnetischen Feldern in der Regel unerwünscht oder bei hohen Sendeleistungen teilweise sogar unzulässig.

In diesem Zusammenhang ist aus der WO 03/069538 A1 eine mit einem Transponder betätigbare Schaltvorrichtung zur Erzeugung eines Schaltsignals bekannt. Die Schaltvorrichtung basiert auf einem Schwingkreis mit einer Kapazität, einer Erkennungsspule sowie einem Oszillatorverstärker. An den Schwingkreis ist ein Frequenzbeobachter angeschaltet, der die in dem Schwingkreis eingestellte Frequenz auswertet und bei Feststellen einer Frequenzänderung ein Schaltsignal abgibt. Eine Frequenzänderung wird durch Annähern eines Transponders bewirkt.

Mit der bekannten Vorrichtung ist zwar eine nahezu leistungslose Transpondererkennung möglich. Allerdings ist eine derartige Vorrichtung primär für Frequenzbereiche unterhalb von ca. 30 MHz einsetzbar, bei denen innerhalb der Übertragungsreichweite eine induktive Kopplung zwischen dem Lesegerät und dem Transponder besteht.

EP 428 322 A1 offenbart ein System zum kontaktlosen Fernauslesen von Verbrauchszählern für Strom, Gas usw. von einem fahrbaren Masterkommunikationsgerät aus. Das Masterkommunikationsgerät besteht aus einer Sende- und einer Empfangseinrichtung, die über einen Schalter umschaltbar sind. Die Verbrauchszähler sind jeweils mit einem Transponder ausgestattet, der grundsätzlich wie das Masterkommunikationsgerät aufgebaut ist. Das Auslesen erfolgt, indem das Masterkommunikationsgerät im Sendebereich befindliche Transponder aufweckt, die daraufhin vom Empfangs- in einen Sendebetrieb wechseln und das Aufgewecktwerden durch Rücksenden eines Adressencodes quittieren. Das Masterkommunikationsgerät vereinzelt einen Transponder und fordert von diesem die Übermittlung eines Verbrauchszählerstandes. Um Kollisionen von Quittierungssignalen der Transponder nach Erhalt eines Aufwecksignales zu vermeiden und die Vereinzelung zu erleichtern, wird vorgeschlagen, die Sendeleistung bei der Abgabe des Aufwecksignales ggf. zu reduzieren. Die bekannte Lösung ist nicht für einen energiesparenden Betrieb konzipiert.

Aus der WO 03/081516 A1 ist ein Fahrzeugzugangssystem mit einer Basisstation und einem Codegeber bekannt, die jeweils als Sender oder Empfänger agieren können. Zur Prüfung der Zugangsberechtigung wird zum einen die Codeinformation von dem Codegeber mit einer in der Basisstation gespeicherten Referenzinformation verglichen. Zusätzlich wird der räumliche Abstand zwischen dem Codegeber und der Basisstation bestimmt. Für die Abstandsbestimmung können die von der Radartechnik her bekannten Prinzipien angewandt werden. Die bekannte Lösung erhöht die Sicherheit bei der Prüfung einer Zugangsberechtigung, ist aber nicht für einen energiesparenden Betrieb konzipiert.

Der Erfindung liegt die Aufgabe zugrunde, auf möglichst optimale Weise eine Detektion eines Transponders, der sich innerhalb eines definierten Gebiets befindet, zu ermöglichen.

Diese Aufgabe wird durch ein Kommunikationsgerät mit der Merkmalskombination des Anspruchs 1 gelöst.

Das erfindungsgemäße Kommunikationsgerät ist in einem Kommunikationsmodus zur kontaktlosen Kommunikation mit wenigstens einem Transponder betreibbar und sendet im Kommunikationsmodus Kommunikationssignale aus. Die Besonderheit des erfindungsgemäßen Kommunikationsgeräts besteht darin, daß ein Detektionsmodus zur Detektion der Anwesenheit wenigstens eines Transponders in einem definiertem Gebiet vorgesehen ist, wobei im Detektionsmodus Detektionssignale mit einer geringeren Sendeleistung ausgesendet werden als die Kommunikationssignale im Kommunikationsmodus.

Die Erfindung hat den Vorteil, daß für eine zuverlässige Detektion der Anwesenheit eines Transponders nur eine sehr geringe Sendeleistung benötigt wird und dadurch der Energieverbrauch des erfindungsgemäßen Kommunikationsgeräts sehr niedrig ist. Dies ist insbesondere dann der Fall, wenn die Zeiten ohne einen anwesenden Transponder gegenüber den Zeiten mit einem anwesenden Transponder stark ins Gewicht fallen oder gar überwiegen. Ein weiterer Vorteil besteht darin, daß die vom erfindungsgemäßen Kommunikationsgerät erzeugte elektromagnetische Strahlung relativ gering ist.

Beim erfindungsgemäßen Kommunikationsgerät kann eine Steuereinheit zur wahlweisen Aktivierung des Kommunikationsmodus oder des Detektionsmodus vorgesehen sein. Dadurch ist es möglich, die Aktivierung des Kommunikationsmodus bzw. des Detektionsmodus bedarfsgerecht vorzunehmen.

Gemäß einem ersten Ausführungsbeispiel der Erfindung sind weiterhin eine Kommunikationseinrichtung zur Durchführung des Kommunikationsmodus und eine Detektionseinrichtung zur Durchführung des Detektionsmodus vorgesehen. Dabei kann insbesondere auch eine Schalteinrichtung vorgesehen sein, die im Kommunikationsmodus die Kommunikationseinrichtung und im Detektionsmodus die Detektionseinrichtung mit einer Antenne verbindet. Dies ermöglicht eine gemeinschaftliche Nutzung einer einzigen Antenne und zudem eine sehr einfache Realisierung der Umschaltung zwischen dem Kommunikationsmodus und dem Detektionsmodus.

Gemäß einem zweiten Ausführungsbeispiel der Erfindung sind eine Sendeeinrichtung und eine Empfangseinrichtung vorgesehen, die jeweils wahlweise im Kommunikationsmodus oder im Detektionsmodus betreibbar sind.

Bei beiden Ausführungsbeispielen ist die für die Detektionssignale vorgesehene Sendeleistung bevorzugt um wenigstens eine Größenordnung kleiner als die für die Kommunikationssignale vorgesehene Sendeleistung. Die Frequenz der Kommunikationssignale und/oder der Detektionssignale liegt vorzugsweise im UHF-Bereich oder im Mikrowellenbereich. Insbesondere weisen die Detektionssignale eine Frequenz innerhalb des Ansprechfrequenzbereichs des Transponders auf. Dies hat den Vorteil, daß der Transponder mit einer sehr hohen Empfindlichkeit detektiert werden kann und dadurch nur eine sehr geringe Sendeleistung für das Detektionssignal erforderlich ist. Insbesondere kann es sich bei den Detektionssignalen um Radarsignale handeln, so daß eine bei anderen Anwendungsfällen bestens bewährte Technologie zum Einsatz kommen kann.

Das erfindungsgemäße Kommunikationsgerät kann weiterhin so ausgebildet sein, daß im Detektionsmodus die Position und/oder die Geschwindigkeit des Transponders ermittelbar ist. Dadurch werden beispielsweise Hochrechnungen bezüglich der erwarteten Anwesenheitszeit des Transponders im vorgegebenen Gebiet und damit bezüglich der Zeit, die voraussichtlich für eine Kommunikation mit dem Transponder zur Verfügung steht, möglich.

Beim erfindungsgemäßen Kommunikationsgerät ist eine Empfangseinrichtung zum Empfang von am Transponder reflektierten Detektionssignalen vorgesehen sein. Aus den reflektierten Signalen wird ermittelt, ob ein Transponder anwesend ist. Beispielsweise kann die Anwesenheit des Transponders aus der Signalstärke und/oder der Signalform der am Transponder reflektierten Detektionssignale ermittelt werden.

Die Kommunikationssignale können zusätzlich zur Kommunikation dafür verwendet werden, den Transponder im Kommunikationsmodus mit Energie zu versorgen. Weiterhin ist es im Kommunikationsmodus möglich, aus den vom Transponder reflektierten Kommunikationssignalen vom Transponder übermittelte Daten zu entnehmen.

Das erfindungsgemäße System ist im Anspruch 15 definiert. Es weist wenigstens einen Transponder und X eine Kommunikationseinrichtung auf, die zur kontaktlosen Kommunikation mit dem Transponder Kommunikationssignale aussendet. Die Besonderheit des erfindungsgemäßen Systems besteht darin, daß eine Detektionseinrichtung vorgesehen ist, die zur Detektion der Anwesenheit wenigstens eines Transponders in einem definiertem Gebiet Detektionssignale aussendet, wobei die Sendeleistung der Detektionseinrichtung geringer ist als die Sendeleistung der Kommunikationseinrichtung.

Das erfindungsgemäßen Verfahren ist im Anspruch 16 definiert. Bei diesem Verfahren zur Detektion der Anwesenheit wenigstens eines Transponders in einem definierten Gebiet werden Detektionssignale in das definierte Gebiet ausgesendet. Das erfindungsgemäße Verfahren zeichnet sich dadurch aus, daß die Detektionssignale mit einer Sendeleistung ausgesendet werden, die geringer ist als die Sendeleistung, mit der Kommunikationssignale zur Kommunikation mit dem Transponder ausgesendet werden.

Bei einer bevorzugten Variante des erfindungsgemäßen Verfahrens wird von einem Detektionsmodus, in dem Detektionssignale ausgesendet werden, in einen Kommunikationsmodus umgeschaltet, in dem Kommunikationssignale ausgesendet werden, wenn die Anwesenheit wenigstens eines Transponders detektiert wird.

Die Erfindung wird nachstehend anhand der in der Zeichnung dargestellten Ausführungsbeispiele erläutert.

### Es zeigen:

- Fig.1: ein vereinfachtes Blockschaltbild für ein erstes Ausführungsbeispiel des erfindungsgemäßen Systems und
- Fig. 2: ein vereinfachtes Blockschaltbild für ein zweites Ausführungsbeispiel des erfindungsgemäßen Systems.

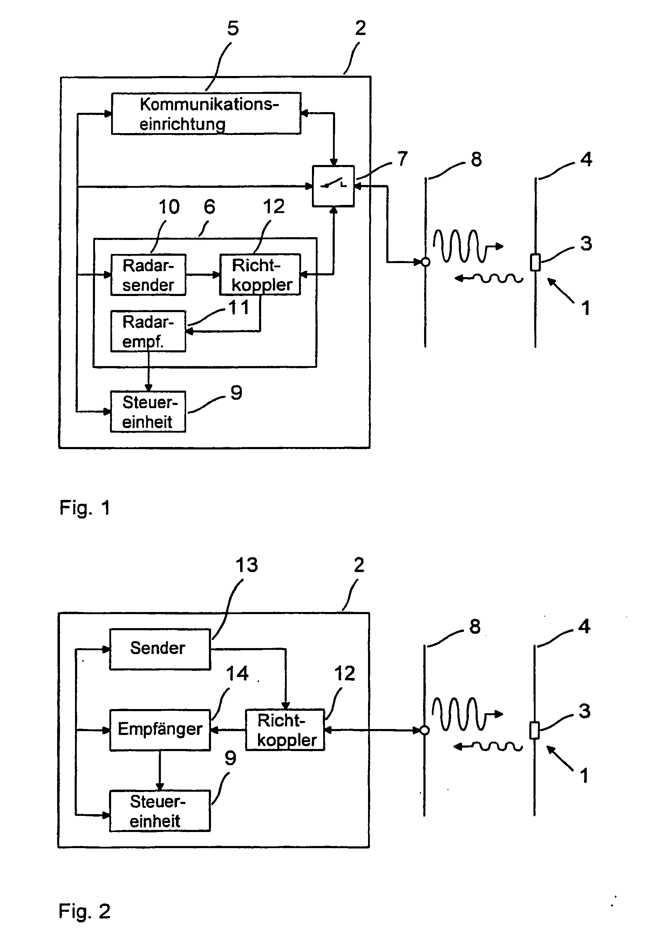

Fig.1 zeigt ein vereinfachtes Blockschaltbild für ein erstes Ausführungsbeispiel des erfindungsgemäßen Systems. Das erfindungsgemäße System weist einen oder mehrere Transponder 1 und ein Kommunikationsgerät 2 auf, das mit dem Transponder 1 auf kontaktlosem Weg kommuniziert. Bei dem Transponder 1 kann es sich um einen beliebigen Datenträger handeln, mit dem eine kontaktlose Kommunikation möglich ist, beispielsweise um eine kontaktlose Chipkarte, ein an einem Gegenstand angebrachtes Label, einen gekapselten Datenträger usw. Im dargestellten Ausführungsbeispiel weist der Transponder 1 eine elektronische Schaltung 3 auf, an die eine Transponderantenne 4 angeschlossen ist. Abhängig von der Anwendung kann der Transponder 1 außerdem einen Träger oder ein Gehäuse aufweisen, die jeweils nicht figürlich dargestellt sind. Bei der elektronischen Schaltung 3 kann es sich beispielsweise um einen Permanentspeicher handeln, der vom Kommunikationsgerät 2 ausgelesen werden kann. Ebenso kann die elektronische Schaltung 3 auch als ein Logikbaustein oder sogar als ein Mikroprozessor ausgebildet sein. Die Erfindung ist unabhängig von der Ausbildung der elektronischen Schaltung 3 einsetzbar.

Die Transponderantenne 4 ist als ein Dipol ausgebildet der in seinen Abmessungen beispielsweise auf die halbe Wellenlänge der für die Kommunikation zwischen dem Transponder 1 und dem Kommunikationsgerät 2 verwendeten elektromagnetischen Wellen abgestimmt ist. Insbesondere werden elektromagnetische Wellen im UHF-Bereich oder im Mikrowellenbereich eingesetzt. Typische Frequenzbereiche sind dabei 868 MHz, 915 MHz, 2,45 GHz, 5,8 GHz und höhere Frequenzen

Das Kommunikationsgerät 2 weist eine Kommunikationseinrichtung 5 und eine Detektionseinrichtung 6 auf, die beide an eine Schalteinrichtung 7 angeschlossen sind. Weiterhin ist an die Schalteinrichtung 7 eine Geräteantenne 8 angeschlossen, die entsprechend der Transponderantenne 4 ausgebildet ist. Die Kommunikationseinrichtung 5, die Detektionseinrichtung 6 und die Schalteinrichtung 7 werden von einer Steuereinheit 9 gesteuert, die hierzu mit all diesen Komponenten 5, 6 und 7 verbunden ist. Die Verbindungen dienen sowohl der Übertragung von Steuersignalen von der Steuereinheit 9 an die zu steuernden Komponenten 5, 6 und 7 als auch zur Übertragung von Statusmeldungen in umgekehrter Richtung. Zwischen der Detektionseinrichtung 6 und der Steuereinheit 9 besteht noch eine zweite Verbindung, die lediglich der Signalübermittlung von der Detektionseinrichtung 6 zur Steuereinheit 9 dient.

Die Kommunikationseinrichtung 5 ist wie ein gebräuchliches Lesegerät für Transponder 1 aufgebaut, so daß hierauf nicht näher eingegangen wird. Die Detektionseinrichtung 6 weist einen Radarsender 10, einen Radarempfänger 11 und einen Richtkoppler 12 auf. Der Richtkoppler 12 ist sowohl mit dem Radarsender 10 als auch mit dem Radarempfänger 11 verbunden. Außerdem ist die Verbindung zwischen der Schalteinrichtung 7 und der Detektionseinrichtung 6 intern zum Richtkoppler 12 weitergeführt. In entsprechender Weise sind die Verbindungen zwischen der Steuereinheit 9 und der Detektionseinrichtung 6 intern zum Radarsender 10 bzw. zum Radarempfänger 11 weitergeführt. Abweichend von der Darstellung der Fig.1 ist es auch möglich, die Detektionseinrichtung 6 außerhalb des Kommunikationsgeräts 2 anzuordnen.

Das Kommunikationsgerät 2 ist in zwei Betriebsarten betreibbar. In einer ersten Betriebsart, die im Folgenden als Kommunikationsmodus bezeichnet wird, kommuniziert das Kommunikationsgerät 2 mit dem Transponder 1. In einer zweiten Betriebsart, die im Folgenden als Detektionsmodus bezeichnet wird, stellt das Kommunikationsgerät 2 fest, ob sich ein Transponder 1 in Übertragungsreichweite befindet. Der Kommunikationsmodus wird von der Kommunikationseinrichtung 5 und der Detektionsmodus von der Detektionseinrichtung 6 des Kommunikationsgeräts 2 durchgeführt. Die Umschaltung zwischen dem Kommunikationsmodus und dem Detektionsmodus erfolgt mit Hilfe der Schalteinrichtung 7, die von der Steuereinheit 9 entsprechend angesteuert wird. Zur Aktivierung des Kommunikationsmodus verbindet die Schalteinrichtung 7 die Kommunikationseinrichtung 5 mit der Geräteantenne 8. Zur Aktivierung des Detektionsmodus wird von der Schalteinrichtung 7 stattdessen eine Verbindung zwischen der Detektionseinrichtung 6 und der Geräteantenne 8 hergestellt.

Im Kommunikationsmodus wird die Kommunikationseinrichtung 5 von der Steuereinheit 9 so angesteuert, daß sie eine Kommunikation mit dem Transponder 1 durchführt. Hierzu erzeugt die Kommunikationseinrichtung 5 ein Kommunikationssignal mit einer Frequenz von beispielsweise 868,520 MHz, das über die Schalteinrichtung 7 der Geräteantenne 8 zugeführt wird, so daß von der Geräteantenne 8 eine entsprechende elektromagnetische Welle abgestrahlt wird. Die Kommunikationseinrichtung 5 sendet mit einer typischen Sendeleistung zwischen ca. 0,5 Watt und 4 Watt. Die abgestrahlte elektromagnetische Welle wird vom Transponder 1 empfangen und bezüglich ihres Informationsgehalts ausgewertet. Außerdem kann sie zur Energieversorgung herangezogen werden, falls der Transponder 1 nicht über eine eigene Energiequelle verfügt. Für die Datenübertragung vom Transponder 1 zur Kommunikationseinrichtung 5 wird der Rückstrahlquerschnitt der Transponderantenne 4 abhängig von den zu übertragenden Daten moduliert. Dies führt zu einer entsprechenden Modulation der elektromagnetischen Welle bei der Reflektion an der Transponderantenne 4. Die reflektierte elektromagnetische Welle wird von der Geräteantenne 8 empfangen und der Kommunikationseinrichtung 5 zur Auswertung zugeführt.

Im Detektionsmodus wird der Radarsender 10 von der Steuereinheit 9 so angesteuert, daß er ein Detektionssignal erzeugt, das über den Richtkoppler 12 und die Schalteinrichtung 7 an die Geräteantenne 8 weitergeleitet und von dieser als eine elektromagnetische Welle in die Umgebung abgestrahlt wird. Die Frequenz des Detektionssignals beträgt beispielsweise 870 MHz und liegt damit dicht bei der Frequenz des Kommunikationssignals. Als Sendeleistung sind 0,005 Watt bis herunter zu 0,0001 Watt ausreichend. Bei entsprechender Optimierung des Radarempfängers 11 ist eine noch geringere Sendeleistung ausreichend. Die Sendeleistung der Detektionseinrichtung 6 ist somit deutlich geringer als die Sendeleistung der Kommunikationseinrichtung 5. In der Regel beträgt der Unterschied mehrere Größenordnungen.

Die von der Geräteantenne 8 im Detektionsmodus abgestrahlte elektromagnetische Welle wird von Gegenständen zum Teil reflektiert, insbesondere wenn diese Gegenstände eine elektrisch leitfähige Oberfläche aufweisen. Als Folge dieser Reflektionen gelangt ein kleiner Bruchteil der abgestrahlten elektromagnetischen Welle zur Geräteantenne 8 zurück und wird über die Schalteinrichtung 7 an den Richtkoppler 12 weitergeleitet. Der Richtkoppler 12 weist zwei unterschiedliche Signalpfade auf, wobei es jeweils von der Ausbreitungsrichtung des Signals abhängt, welcher Signalpfad zur Verfügung steht. Über einen ersten Signalpfad des Richtkopplers 12 werden der Radarsender 10 und die Schalteinrichtung 7 miteinander verbunden. Über einen zweiten Signalpfad des Richtkopplers 12 werden der Radarempfänger 11 und die Schalteinrichtung 7 miteinander verbunden. Der erste Signalpfad steht für Signale zur Verfügung, die vom Radarsender 10 in den Richtkoppler 12 eingespeist werden. Der zweite Signalpfad ist Signalen vorbehalten, die von der Schalteinrichtung 7 in den Richtkoppler 12 eingespeist werden. Dies hat zur Folge, daß der Richtkoppler 12 die vom Radarsender 10 eingespeisten Detektionssignale an die Schalteinrichtung 7 und die von der Schalteinrichtung 7 eingespeisten reflektierten Detektionssignale an den Radarempfänger 11 weiterleitet. Die von der Geräteantenne 8 empfangenen und über die Schalteinrichtung 7 an den Richtkoppler 12 übermittelten reflektierten Detektionssignale gelangen somit zum Radarempfänger 11 und werden dort verstärkt und ausgewertet.

Solange sich kein Transponder 1 in der Nähe der Geräteantenne 8 befindet, registriert der Radarempfänger 11 ein im Wesentlichen konstantes reflektiertes Detektionssignal, das durch die Reflektion der von der Geräteantenne 8 abgestrahlten elektromagnetischen Welle an Gegenständen in der Umgebung der Geräteantenne 8 erzeugt wird. Bei einer Annäherung eines Transponders 1 an die Geräteantenne 8 kommt es zu einem Anstieg der Signalstärke des reflektierten Detektionssignals. Dieser Anstieg ist besonders signifikant, wenn vom Radarsender 10 ein Detektionssignal mit einer Frequenz innerhalb des Ansprechfrequenzbereichs des Transponders 1 erzeugt wird, innerhalb dessen üblicherweise auch die Kommunikation mit dem Transponder 1 abgewickelt wird. In diesem Ansprechfrequenzbereich, der sich beispielsweise von 860 MHz bis 930 MHz erstreckt, weist der Transponder 1 einen besonders hohen Rückstreuquerschnitt auf. Prinzipiell ist allerdings auch ein Betrieb außerhalb des Ansprechfrequenzbereichs möglich, wobei dann allerdings ein deutlich schlechterer Wirkungsgrad erzielt wird. Wenn die vom Radarempfänger 11 registrierte Signalstärke des reflektierten Detektionssignals einen vorgegebenen Wert überschreitet oder sich plötzlich ändert, ist davon auszugehen, daß das Detektionssignal an einem Transponder 1 in der Nähe der Geräteantenne 8 reflektiert wurde. Dementsprechend übermittelt der Radarempfänger 11 ein Schaltsignal an die Steuereinheit 9.

Alternativ oder zusätzlich ist es auch möglich, daß der Radarempfänger 11 die Signalform des reflektierten Detektionssignals auswertet und beim Erkennen einer vorgegebenen Signalform, insbesondere eine Änderung der Signalstärke, ein Schaltsignal an die Steuereinheit 9 übermittelt. Dies setzt voraus, daß mit der Annäherung des Transponders 1 an die Geräteantenne 8 eine ausreichend signifikante Änderung der Signalform des reflektierten Detektionssignals einhergeht.

Wenn die Steuereinheit 9 ein Schaltsignal vom Radarempfänger 11 übermittelt bekommt, steuert sie die Schalteinrichtung 7 so an, daß die Verbindung zwischen der Detektionseinrichtung 6 und der Geräteantenne 8 unterbrochen wird und stattdessen die Kommurukationseinrichtung 5 mit der Geräteantenne 8 verbunden wird. Außerdem veranlasst die Steuereinheit 9 die Kommunikationseinrichtung 5, die vorstehend beschriebene Kommunikation mit dem Transponder 1 durchzuführen. Das Schaltsignal löst somit einen Übergang des Kommunikationsgeräts 2 vom Detektionsmodus in den Kommunikationsmodus aus.

Wenn sich kein Transponder 1 mehr in Übertragungsreichweite zum Kommunikationsgerät 2 befindet, wird das Kommunikationsgerät 2 wieder im Detektionsmodus betrieben. Hierzu steuert die Steuereinheit 9 die Schalteinrichtung 7 so an, daß der Radarsender 10 zur Geräteantenne 8 durchgeschaltet wird. Außerdem veranlasst die Steuereinheit 9 den Radarsender 10, Detektionssignale zu erzeugen.

Als Signalform des vom Radarsender 10 erzeugten Detektionssignals sind prinzipiell alle in der Radartechnik gebräuchlichen Signaltypen geeignet. Je nach dem verwendeten Signaltyp ist es in Weiterbildung der vorstehend beschriebenen Ermittlung der Anwesenheit eines Transponders 1 in Übertragungsreichweite zum Kommunikationsgerät 2 möglich, zusätzlich die Geschwindigkeit des Transponders 1 relativ zum Kommunikationsgerät 2 und die Entfernung des Transponders 1 vom Kommunikationsgerät 2 zu ermitteln. Beispielsweise kann mit einem Dauerstrichsignal die Relativgeschwindigkeit des Transponders 1 ermittelt werden. Die Entfernung kann in diesem Fall nur sehr ungenau über die Signalstärke ermittelt werden. Mit einem frequenzmodulierten Dauerstrichsignal lassen sich die Relativgeschwindigkeit und die Entfernung des Transponders 1 ermitteln. Ebenso lassen sich auch mit einem Pulssignal die Relativgeschwindigkeit und die Entfernung des Transponders 1 ermitteln. Dabei läßt sich eine hohe Reichweite bei einem geringen Energieverbrauch erzielen. Eine höhere Messgenauigkeit läßt sich mit Pulskompression und Chirp-Signal erzielen.

Durch eine entsprechende Auswertung des reflektierten Detektionssignals ist somit beispielsweise eine Unterscheidung möglich, ob sich ein Transponder 1 dem Kommunikationsgerät 2 nähert oder sich von diesem entfernt. Außerdem besteht die Möglichkeit, das Kommunikationsgerät 2 durch die Auswahl eines geeigneten Signaltyps für die vorgesehene Einsatzumgebung zu optimieren. Beispielsweise kann für den Betrieb in geschlossenen Räumen, in denen starke Reflektionen auftreten können, ein anderer Signaltyp ausgewählt werden als für den Betrieb im Freien, bei dem eher mit schwachen Reflektionen zu rechnen ist, dafür möglicherweise aber eine höhere Reichweite gewünscht wird.

Fig. 2 zeigt ein vereinfachtes Blockschaltbild für ein zweites Ausführungsbeispiel des erfindungsgemäßen Systems, das wiederum einen oder mehrere Transponder 1 und das Kommunikationsgerät 2 aufweist. Allerdings ist bei dem in Fig. 2 dargestellten Kommunikationsgerät 2 die Trennung in eine Kommunikationseinrichtung 5 und eine separate Detektionseinrichtung 6 aufgehoben. Stattdessen weist das Kommunikationsgerät 2 beim zweiten Ausführungsbeispiel einen Sender 13 auf, der sowohl Kommunikationssignale als auch Detektionssignale senden kann. In entsprechender Weise ist ein Empfänger 14 vorgesehen, der reflektierte Kommunikationssignale und reflektierte Detektionssignale empfangen kann. Daneben sind weiterhin die Geräteantenne 8, die Steuereinheit 9 und der Richtkoppler 12 vorgesehen. Die Geräteantenne 8, der Sender 13 und der Empfänger 14 sind jeweils mit dem Richtkoppler 12 verbunden. Außerdem bestehen Verbindungen zur Übertragung von Steuer- und Statussignalen zwischen der Steuereinheit 9 und dem Sender 13 sowie dem Empfänger 14. Schließlich ist noch eine weitere Verbindung zwischen der Steuereinheit 9 und dem Empfänger 14 ausgebildet, über die der Empfänger 14 Schaltsignale an die Steuereinheit 9 übermitteln kann.

Auch beim zweiten Ausführungsbeispiel kann das Kommunikationsgerät 2 wahlweise im Kommunikationsmodus oder im Detektionsmodus betrieben werden. Um in den Detektionsmodus umzuschalten steuert die Steuereinheit 9 den Sender 13 so an, daß dieser Detektionssignale geringer Leistung in entsprechender Weise wie der Radarsender 10 des ersten Ausführungsbeispiels erzeugt. Der Empfänger 14 wird von der Steuereinheit 9 so angesteuert, daß er sich entsprechend dem Radarempfänger 11 des ersten Ausführungsbeispiels verhält und reflektierte Detektionssignale auswertet. Dabei werden die jeweils benötigten Signalpfade vom Sender 13 zur Geräteantenne 8 bzw. von der Geräteantenne 8 zum Empfänger 14 durch den Richtkoppler 12 ausgebildet. Ergibt die Auswertung der reflektierten Detektionssignale, daß sich ein Transponder 1 in Übertragungsreichweite zum Kommunikationsgerät 2 befindet, so übermittelt der Empfänger 14 ein Schaltsignal an die Steuereinheit 9 und veranlasst damit eine Umschaltung vom Detektionsmodus in den Kommunikationsmodus. Die Steuereinheit 9 steuert daraufhin den Sender 13 und den Empfänger 14 so an, daß sich diese wie die Kommunikationseinrichtung 5 des ersten Ausführungsbeispiels verhalten. Dies bedeutet, daß der Sender 13 nunmehr Kommunikationssignale hoher Leistung erzeugt und der Empfänger 14 reflektierte Kommunikationssignale demoduliert, um die vom Transponder 1 übertragenen Daten zu ermitteln.

Die sonstigen Abläufe und Betriebsdaten des zweiten Ausführungsbeispiels entsprechen in analoger Weise dem ersten Ausführungsbeispiel.

## Patentansprüche

1. Kommunikationsgerät, das in einem Kommunikationsmodus zur kontaktlosen Kommunikation mit wenigstens einem Transponder (1) betreibbar ist, wobei im Kommunikationsmodus Kommunikationssignale ausgesendet werden und das weiterhin über ein Detektionsmodus zur Detektion der Anwesenheit wenigstens eines Transponders (1) in einem definierten Gebiet verfügt, wobei im Detektionsmodus Detektionssignale mit einer geringeren Sendeleistung ausgesendet werden als die Kommunikationssignale im Kommunikationsmodus, **dadurch gekennzeichnet, daß** eine Empfangseinrichtung (11,14) zum Empfang von an einem Transponder (1) reflektierten Detektionssignalen vorgesehen ist, welche die reflektierten Detektionssignale auswertet.

2. Kommunikationsgerät nach Anspruch 1, **dadurch gekennzeichnet, daß** eine Steuereinheit (9) zur wahlweisen Aktivierung des Kömmunikationsmodus oder des Detektionsmodus vorgesehen ist.

3. Kommunikationsgerät nach einem der vorhergehenden Ansprüche, **dadurch gekennzeichnet, daß** eine Kommunikationseinrichtung (5) zur Durchführung des Kommunikationsmodus und eine Detektionseinrichtung (6) zur Durchführung des Detektionsmodus vorgesehen sind.

4. Kommunikationsgerät nach Anspruch 3, **dadurch gekennzeichnet, daß** eine Schalteinrichtung (7) vorgesehen ist, die im Kommunikationsmodus die Kommunikationseinrichtung (5) und im Detektionsmodus die Detektionseinrichtung (6) mit einer Antenne (8) verbindet.

5. Kommunikationsgerät nach Anspruch 1, **dadurch gekennzeichnet, daß** eine Sendeeinrichtung (13) und eine Empfangseinrichtung (14) vorgesehen sind, die jeweils wahlweise im Kommunikationsmodus oder im Detektionsmodus betreibbar sind.

6. Kommunikationsgerät nach einem der vorhergehenden Ansprüche, **dadurch gekennzeichnet, daß** die für die Detektionssignale vorgesehene Sendeleistung um wenigstens eine Größenordnung kleiner ist als die für die Kommunikationssignale vorgesehene Sendeleistung.

7. Kommunikationsgerät nach einem der vorhergehenden Ansprüche, **dadurch gekennzeichnet, daß** die Kommunikationssignale und/oder die Detektionssignale eine Frequenz im UHF-Bereich oder im Mikrowellenbereich aufweisen.

8. Kommunikationsgerät nach einem der vorhergehenden Ansprüche, **dadurch gekennzeichnet, daß** die Detektionssignale eine Frequenz innerhalb des Ansprechfrequenzbereichs des Transponders (1) aufweisen.

9. Kommunikationsgerät nach einem der vorhergehenden Ansprüche, **dadurch gekennzeichnet, daß** es sich bei den Detektionssignalen um Radarsignale handelt.

10. Kommunikationsgerät nach einem der vorhergehenden Ansprüche, **dadurch gekennzeichnet, daß** im Detektionsmodus die Position und/ oder die Geschwindigkeit des Transponders (1) ermittelbar ist.

11. Kommunikationsgerät nach einem der vorhergehenden Ansprüche, **dadurch gekennzeichnet, daß** die Detektionseinrichtung (6) einen Richtkoppler (12) aufweist, der an einem Transponder (1) reflektierte Detektionssignale an die Empfangseinrichtung (11,14) leitet..

12. Kommunikationsgerät nach Anspruch 11, **dadurch gekennzeichnet, daß** die Anwesenheit des Transponders (1) aus der Signalstärke und/ oder der Signalform der am Transponder (1) reflektierten Detektionssignale ermittelbar ist.

13. Kommunikationsgerät nach einem der vorhergehenden Ansprüche, **dadurch gekennzeichnet, daß** im Kommunikationsmodus der Transponder (1) über die Kommunikationssignale mit Energie versorgbar ist.

14. Kommunikationsgerät nach einem der vorhergehenden Ansprüche, **dadurch gekennzeichnet, daß** im Kommunikationsmodus aus den vom Transponder (1) reflektierten Kommunikationssignalen vom Transponder (1) übermittelte Daten entnehmbar sind.

15. System mit wenigstens einem Transponder (1) und einer Kommunikationseinrichtung (5), die zur kontaktlosen Kommunikation mit dem Transponder (1) Kommunikationssignale aussendet, wobei eine Detektionseinrichtung (6) vorgesehen ist, die zur Detektion der Anwesenheit wenigstens eines Transponders (1) in einem definierten Gebiet Detektionssignale aussendet, wobei die Sendeleistung der Detektionseinrichtung (6) geringer ist als die Sendeleistung der Kommunikationseinrichtung (5), **dadurch gekennzeichnet, daß** weiterhin eine Empfangseinrichtung (11,14) zum Empfang von an einem Transponder (1) reflektierten Detektionssignalen vorgesehen ist, welche die reflektierten Detektionssignale auswertet.

16. Verfahren zur Detektion der Anwesenheit wenigstens eines Transponders (1) in einem definierten Gebiet, wobei Detektionssignale in das definierte Gebiet mit einer Sendeleistung ausgesendet werden, die geringer ist als die Sendeleistung, mit der Kommunikationssignale zur Kommunikation mit dem Transponder (1) ausgesendet werden, und wobei die an dem Transponder (1) reflektierten Detektionssignale empfangen und ausgewertet werden.

17. Verfahren nach Anspruch 16, **dadurch gekennzeichnet, daß** von einem Detektionsmodus, in dem Detektionssignale ausgesendet werden, in einen Kommunikationsmodus umgeschaltet wird, in dem Kommunikationssignale ausgesendet werden, wenn die Anwesenheit wenigstens eines Transponders (1) detektiert wird.

## Claims

1. A communication device which is operable in a communication mode for contactless communication with at least one transponder (1), wherein communication signals are emitted in the communication mode and which further has a detection mode for detecting the presence of at least one transponder (1) in a defined area, wherein detection signals with a lower transmitting power are emitted in the detection mode than the communication signals in the communication mode, **characterized in that** a receiving device (11, 14) for receiving detection signals reflected by a transponder (1) is provided which evaluates the reflected detection signals.

2. The communication device according to claim 1, **characterized in that** a control unit (9) is provided for alternatively activating the communication mode or the detection mode.

3. The communication device according to any of the previous claims, **characterized in that** a communication device (5) is provided for carrying out the communication mode and a detection device (6) for carrying out the detection mode.

4. The communication device according to claim 3, **characterized in that** a switching device (7) is provided which connects the communication device (5) to an antenna (8) in the communication mode and the detection device (6) thereto in the detection mode.

5. The communication device according to claim 1, **characterized in that** a transmitting device (13) and a receiving device (14) are provided which are in each case operable alternatively in the communication mode or in the detection mode.

6. The communication device according to any of the previous claims, **characterized in that** the transmitting power provided for the detection signals is smaller by at least one order of magnitude than the transmitting power provided for the communication signals.

7. The communication device according to any of the previous claims, **characterized in that** the communication signals and/or the detection signals have a frequency in the UHF range or in the microwave range.

8. The communication device according to any of the previous claims, **characterized in that** the detection signals have a frequency within the response frequency range of the transponder (1).

9. The communication device according to any of the previous claims, **characterized in that** the detection signals are radar signals.

10. The communication device according to any of the previous claims, **characterized in that** the position and/or the speed of the transponder (1) is determinable in the detection mode.

11. The communication device according to any of the previous claims, **characterized in that** the detection device (6) has a directional coupler (12) which directs detection signals reflected by a transponder (1) to the receiving device (11, 14).

12. The communication device according to claim 11, **characterized in that** the presence of the transponder (1) is determinable from the signal strength and/or the signal form of the detection signals reflected by the transponder (1).

13. The communication device according to any of the previous claims, **characterized in that** the transponder (1) is adapted to be supplied with energy via the communication signals in the communication mode.

14. The communication device according to any of the previous claims, **characterized in that**, in the communication mode, data transmitted by the transponder (1) can be taken from the communication signals reflected by the transponder (1).

15. A system having at least one transponder (1) and a communication device (5) which emits communication signals for contactless communication with the transponder (1), wherein a detection device (6) is provided which emits detection signals for detecting the presence of at least one transponder (1) in a defined area, wherein the transmitting power of the detection device (6) is smaller than the transmitting power of the communication device (5), **characterized in that** a receiving device (11, 14) for receiving detection signals reflected by a transponder (1) is further provided which evaluates the reflected detection signals.

16. A method for detecting the presence of at least one transponder (1) in a defined area, wherein detection signals are emitted to the defined area with a transmitting power that is smaller than the transmitting power with which communication signals are emitted for communication with the transponder (1), and wherein the detection signals reflected by the transponder (1) are received and evaluated.

17. The method according to claim 16, **characterized in that** a switchover takes place from a detection mode in which detection signals are emitted to a communication mode in which communication signals are emitted when the presence of at least one transponder (1) is detected.

## Revendications

1. Appareil de communication apte à fonctionner dans un mode de communication pour la communication sans contact avec au moins un transpondeur (1), des signaux de communication étant émis dans le mode de communication, et disposant en outre d'un mode de détection pour la détection de la présence d'au moins un transpondeur (1) dans une zone définie, des signaux de détection étant émis dans le mode de détection avec une plus faible puissance d'émission que les signaux de communication dans le mode de communication, **caractérisé en ce qu'**un dispositif de réception (11, 14) est prévu pour la réception de signaux de détection réfléchis par un transpondeur (1), ce dispositif de réception (11, 14) dépouillant les signaux de détection réfléchis.

2. Appareil de communication selon la revendication 1, **caractérisé en ce qu'**une unité de commande (9) est prévue pour l'activation au choix soit du mode de communication, soit du mode de détection.

3. Appareil de communication selon une des revendications précédentes, **caractérisé en ce qu'**un dispositif de communication (5) pour l'exécution du mode de communication et un dispositif de détection (6) pour l'exécution du mode de détection sont prévus.

4. Appareil de communication selon la revendication 3, **caractérisé en ce qu'**un dispositif de commutation (7) reliant le dispositif de communication (5) avec une antenne (8) en mode de communication et reliant le dispositif de détection (6) avec cette antenne en mode de détection est prévu.

5. Appareil de communication selon la revendication 1, **caractérisé en ce qu'**un dispositif d'émission (13) et un dispositif de réception (14) étant respectivement aptes à fonctionner au choix soit en mode de communication, soit du mode de détection, sont prévus.

6. Appareil de communication selon une des revendications précédentes, **caractérisé en ce que** la puissance d'émission prévue pour les signaux de détection est inférieure d'au moins un ordre de grandeur à la puissance d'émission prévue pour les signaux de communication.

7. Appareil de communication selon une des revendications précédentes, **caractérisé en ce que** les signaux de communication et / ou les signaux de détection présentent une fréquence située dans la plage UHF ou micro-ondes.

8. Appareil de communication selon une des revendications précédentes, **caractérisé en ce que** les signaux de détection présentent une fréquence située à l'intérieur de la fréquence à laquelle le transpondeur (1) répond.

9. Appareil de communication selon une des revendications précédentes, **caractérisé en ce que** les signaux de détection consistent en des signaux de radar.

10. Appareil de communication selon une des revendications précédentes, **caractérisé en ce que** la position et / ou la vitesse du transpondeur (1) est déterminable en mode de détection.

11. Appareil de communication selon une des revendications précédentes, **caractérisé en ce que** le dispositif de détection (6) comporte un coupleur directif (12) qui mène au dispositif de réception (11, 14) des signaux de détection réfléchis par un transpondeur (1).

12. Appareil de communication selon la revendication 11, **caractérisé en ce que** la présence du transpondeur (1) est déterminable à partir de la puissance et / ou de la forme des signaux de détection réfléchis par un transpondeur (1).

13. Appareil de communication selon une des revendications précédentes, **caractérisé en ce que**, en mode de communication, le transpondeur (1) peut être alimenté en énergie par l'intermédiaire des signaux de communication.

14. Appareil de communication selon une des revendications précédentes, **caractérisé en ce que**, en mode de communication, des données transmises par le transpondeur (1) peuvent être prélevées à partir des signaux réfléchis par le transpondeur (1).

15. Système comportant au moins un transpondeur (1) et un dispositif de communication (5) émettant des signaux de communication pour la communication sans contact avec le transpondeur (1), un dispositif de détection (6) émettant des signaux de détection pour la détection de la présence d'au moins un transpondeur (1) dans une zone définie étant prévu, la puissance d'émission du dispositif de détection (6) étant inférieure à la puissance d'émission du dispositif de communication (5), **caractérisé en ce qu'**un dispositif de réception (11, 14) est en outre prévu pour la réception de signaux de détection réfléchis par un transpondeur (1), ce dispositif de réception (11, 14) dépouillant les signaux de détection réfléchis.

16. Procédé de détection de la présence d'au moins un transpondeur (1) dans une zone définie, des signaux de détection étant émis dans la zone définie avec une puissance d'émission inférieure à la puissance d'émission avec laquelle des signaux de communication sont émis pour la communication avec le transpondeur (1), et les signaux de détection réfléchis par le transpondeur (1) étant réceptionnés et dépouillés.

17. Procédé selon la revendication 16, **caractérisé en ce que**, quand la présence d'au moins un transpondeur (1) est détectée, il est commuté d'une mode de détection dans lequel des signaux de détection sont émis à un mode de communication dans lequel des signaux de communication sont émis.
